# EUROPÄISCHE PATENTSCHRIFT

(11) **EP 2 500 467 B1**
(45) Veröffentlichungstag und Bekanntmachung des Hinweises auf die Patenterteilung: **30.04.2014**
(21) Anmeldenummer: 12001704.1
(22) Anmeldetag: 13.03.2012
(51) Int. Cl.: D21G 1/02, F16C 13/02, F16C 27/04

(54) **Walze**
Roll
Rouleau

(30) Priorität: 14.03.2011 DE 202011003940 U
(43) Veröffentlichungstag der Anmeldung: 19.09.2012
(73) Patentinhaber: Texmag GmbH Vertriebsgesellschaft, 8800 Thalwil (CH)
(72) Erfinder: Spatz, Michael, 86399 Bobingen (DE)
(74) Vertreter: Witzany, Manfred

(56) Entgegenhaltungen:
- DE-A1-102005 000 025

## Beschreibung

Die Erfindung betrifft eine Walze gemäß dem Oberbegriff des Patentanspruchs 1.

Aus der DE 10 2005 000 025 A1 ist eine gattungsgemäße Walze bekannt. Diese besteht aus einem rohrförmigen Walzenkörper, der mittels Wälzlagern drehbar auf einer festen Achse gelagert ist. Derartige Walzen dienen zum Umlenken von laufenden Warenbahnen und haben sich in der Praxis vielfach bewährt.

Der Erfindung liegt die Aufgabe zugrunde, eine Walze der eingangs genannten Art zu erstellen, die sich durch geringere Herstellungskosten auszeichnet.

Diese Aufgabe wird erfindungsgemäß mit den Merkmalen des Patentanspruchs 1 gelöst.

Die Walze gemäß Anspruch 1 dient zum Umlenken und/oder Transport einer laufenden Warenbahn, insbesondere einer Textil-, Papier-, Wellpappen-, Wellpappenlagen-, Folien-, Gummi- oder Metallbahn. Die Walze weist mindestens einen rohrförmigen Walzenkörper auf, der zur Verringerung der Reibung über mindestens ein Wälzlager an einer Achse abgestützt ist. Ein derartiges Wälzlager kann an beiden Enden der Walze vorgesehen sein. Bei kurzen Walzen ist auch eine einseitige Walzenlagerung denkbar. Außerdem ist daran gedacht, mehrere Wälzlager an einer Seite der Walze anzubringen bzw. Wälzlager über die Länge der Walze verteilt anzuordnen. Der rohrförmige Walzenkörper ist das mit Abstand größte Bauteil der Walze und wird in der Regel gegossen oder extrudiert. Diese Herstellungsverfahren haben jedoch den Nachteil, dass sie keine ausreichende Maßgenauigkeit für den Wälzlagersitz aufweisen. Aus diesem Grund war es im Stand der Technik stets erforderlich, den Sitz für das Wälzlager auszudrehen, was bei großen Walzen entsprechend schwierig ist. Insbesondere mussten diese zusätzlichen Arbeiten mit sehr hoher Präzision durchgeführt werden, um den korrekten Rundlauf der Walze im Betrieb sicherzustellen. Dies verteuerte die Herstellung der Walze erheblich.

Um eine kostengünstigere Herstellung der Walze zu ermöglichen, weist die erfindungsgemäße Walze radial nach innen gerichtete Stege auf, die über den Walzenumfang verteilt angeordnet sind. An diesen Stegen ist dabei das mindestens eine Wälzlager vorzugsweise unmittelbar abgestützt. Diese Stege bilden die Aufnahme für das Wälzlager. Durch Ausnutzen der Elastizität des Materials des Walzenkörpers und damit der Stege ist diese Aufnahme für das Wälzlager geringfügig radial verstellbar. Beim Einpressen des Wälzlagers werden die Stege geringfügig elastisch deformiert, so dass auf diese Weise Fertigungstoleranzen bei der Herstellung des Walzenkörpers ausgeglichen werden. Diese Fertigungstoleranzen betreffen sowohl beim Gieß- als auch beim Extrudierverfahren lediglich die Größe des gesamten Walzenkörpers, nicht jedoch Länqenverhältnisse der Stege untereinander. Dies hat zur Folge, dass trotz der zwangsweise vorhandenen Fertigungstoleranzen die Gleichförmigkeit der Stege gewährleistet ist. Wären zusätzlich die einzelnen Stege unterschiedlich lang, so würde der Walzenkörper exzentrisch gelagert werden, was zu nicht tolerierbaren Unwuchten im System führte. Es hat sich überraschenderweise herausgestellt, dass die nunmehr elastische Lagerung des Walzenkörpers auf dem Wälzlager auch unter Belastung der Walze weder zu exzentrischen Lagerungen noch zu Unwuchten führt. Die Walze läuft bei maximaler radialer Belastung und maximaler Laufgeschwindigkeit der Warenbahn sauber zentrisch ohne Ausbildung von Unwuchten.

Zur weiteren Vereinfachung der Walzenherstellung ist es gemäß Anspruch 2 günstig, wenn mindestens eine Nut zwischen den Stegen mit einer axial ausgerichteten Erweiterung zur Aufnahme von Befestigungsschrauben und/oder Wuchtgewichten vorgesehen ist. Damit kann das Wälzlager einfach mittels Befestigungsschrauben fixiert und/oder die Walze ausgewuchtet werden, ohne dass hierzu weitere Bearbeitungsschritte bei der Herstellung des Walzenkörpers erforderlich wären.

Zur Verbesserung der Verbiegbarkeit der Stege ist es gemäß Anspruch 3 vorteilhaft, wenn mindestens einer der Stege zu mindestens einem Ende verjüngt ist. Diese Verjüngung bildet eine Sollbiegestelle, um die der Steg verschwenkt wird. Durch Verbiegen der Stege um diese Sollbiegestelle erweitert sich der Innendurchmesser des Sitzes für das Wälzlager entsprechend.

Gemäß Anspruch 4 ist es vorteilhaft, wenn mindestens einer der Stege an seinem innenseitigen Ende mindestens eine radial nach innen gerichtete Nocke aufweist, die beim Einsetzen des Wälzlagers plastisch verformbar ist. Damit werden Fertigungstoleranzen bei der Herstellung des Walzenkörpers noch besser ausgeglichen, da sowohl plastische als auch elastische Deformationen zur Anpassung der Innenkontur des Walzenkörpers an die Außenkontur des Wälzlagers genutzt werden.

Schließlich ist es gemäß Anspruch 5 vorteilhaft, wenn der Walzenkörper als Strangpressprofil gefertigt ist. Auf diese Weise ergeben sich sehr günstige Herstellungskosten für den Walzenkörper. In einem Pressvorgang kann eine Vielzahl von Walzen mit gleichem Außendurchmesser aber gegebenenfalls unterschiedlicher Länge hergestellt werden, ohne den Produktionsvorgang unterbrechen zu müssen. Auf diese Weise ergibt sich eine gute Reproduzierbarkeit der Dimensionen des Walzenkörpers und damit eine gute Passung für das Wälzlager.

Der Erfindungsgeqenstand wird beispielhaft anhand der Zeichnung erläutert, ohne den Schutzumfang zu beschränken.

Es zeigt:
- Figur 1: eine Schnittdarstellung durch eine Walze entlang der Schnittlinie I-I gemäß Figur 2 und
- Figur 2: eine zugeordnete Schnittdarstellung der Walze gemäß Figur 1 entlang der Schnittlinie II-II.

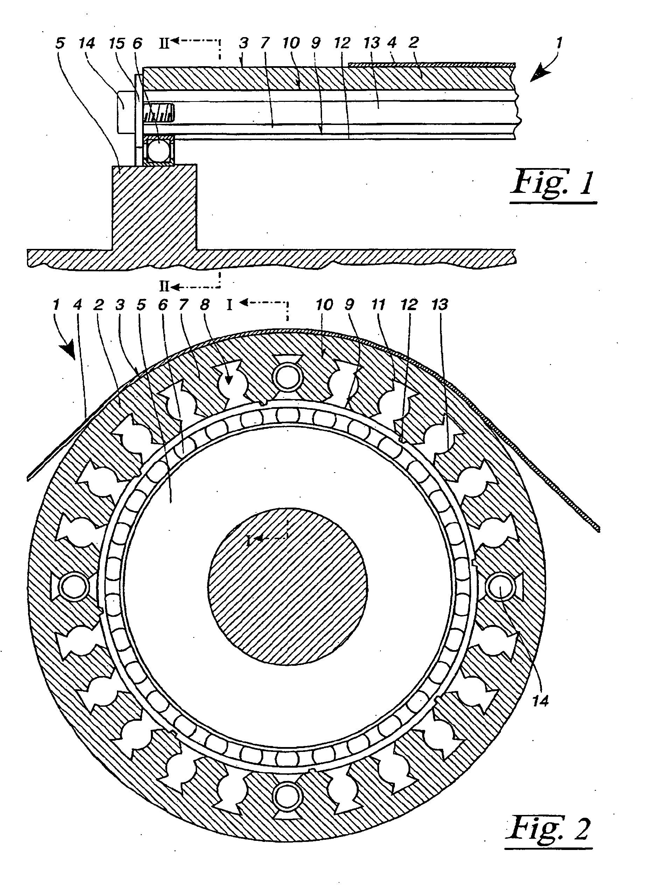

Eine Walze 1 gemäß den Figuren 1 und 2 weist einen rohrförmigen Walzenkörper 2 auf. Dieser Walzenkörper 2 besitzt einen konstanten Querschnitt, der insbesondere aus Figur 2 zu ersehen ist. Der Walzenkörper 2 besitzt eine zylindrische Außenkontur 3, die eine Warenbahn 4 erfasst und umlenkt.

Der Walzenkörper 2 ist auf einer festen Achse 5 drehbar abgestützt. Zur Reduktion der Reibung bei der Rotation des Walzenkörpers 2 ist beidendig jeweils ein Wälzlager 6 vorgesehen. Alternativ könnten auch mehrere Wälzlager 6 auf einer oder beiden Seiten vorgesehen sein, um die Stützkraft zu verbessern oder zusätzlich axiale Lagerkräfte abzustützen. Außerdem ist daran gedacht, bei kurzen Walzen 1 diese nur einseitig zu lagern.

Der Walzenkörper 2 weist eine Vielzahl von radial nach innen gerichteten Stegen 7 auf, die voneinander durch Nuten 8 getrennt sind. Die Gesamtheit der innenseitigen Enden 9 der Stege 7 stützt das Wälzlager 6 am Walzenkörper 2 ab. An außenseitigen Enden 10 weisen die Stege 7 eine Verjüngung 11 auf, die eine Sollbiegestelle für die Stege 7 bildet. Um diese Verjüngung 11 kann jeder Steg 7 elastisch verschwenkt werden, um eine geometrische Anpassung des innenseitigen Endes 9 an das Wälzlager 6 zu ermöglichen. Damit können Fertigungstoleranzen bei der Herstellung des Walzenkörpers 2 beispielsweise im Strangpressverfahren ausgeglichen werden. Eine Nachbearbeitung des Walzenkörpers 2 zum Ausgleich der Fertigungstoleranzen ist demnach entbehrlich. Nachdem die Durchmesseranpassung des Walzenkörpers 2 an das Wälzlager 6 durch die Stege 7 elastisch erfolgt, kann das Wälzlager 6 problemlos ausgetauscht werden, ohne den korrekten und festen Sitz des neuen Wälzlagers 6 im Walzenkörper 2 zu gefährden.

Zur zusätzlichen Anpassung an Toleranzen des Wälzlagers 6 weist eine Anzahl der Stege 7 radial nach innen gerichtete Nocken 12 auf. Diese Nocken 12 sind dünnwandig ausgebildet und werden beim Einpressen des Wälzlagers 6 in den Walzenkörper 2 verdrängt, also plastisch verformt. Dies gewährleistet einen perfekten Sitz des Wälzlagers 6 im Walzenkörper 2 auch bei unterschiedlich dimensionierten Wälzlagern 6. Allerdings muss sichergestellt sein, dass ein ausgetauschtes Wälzlager 6 keinen wesentlich geringeren Außendurchmesser als das ursprünglich eingesetzte Wälzlager 6 besitzt, so dass der feste Sitz des ausgetauschten Wälzlagers 6 ausschließlich durch die elastischen Rückstellkräfte der Stege 7 gewährleistet werden kann.

In den Nuten 8 zwischen den Stegen 7 sind axial ausgerichtete Erweiterungen 13 vorgesehen, die zur Aufnahme von Befestigungsschrauben 14 dienen. Mit Hilfe dieser Befestigungsschrauben 14 und zusätzliche Haltemittel 15 - beispielsweise in Form von Scheiben - kann das Wälzlager 6 axial gesichert werden. Da die Erweiterung 13 bereits bei der Herstellung des Walzenkörpers 2 im Stranqpressverfahren eingeformt werden kann, ist hierzu kein weiterer Bearbeitungsschritt erforderlich. In die Erweiterung 13 kann ein entsprechendes Gewinde eingeschnitten werden, um die Befestigungsschraube 14 festzulegen. Alternativ kann die Befestigungsschraube 14 auch als selbstschneidende Schraube ausgebildet sein, was die Bearbeitungskosten weiter senkt. Die Erweiterung 13 kann auch zur Aufnahme von Wuchtgewichten dienen.

### Bezugszeichenliste

- 1: Walze
- 2: Walzenkörper
- 3: Außenkontur
- 4: Warenbahn
- 5: Achse
- 6: Wälzlager
- 7: Steg
- 8: Nut
- 9: innenseitiges Ende
- 10: außenseitiges Ende
- 11: Verjüngung
- 12: Nocke
- 13: Erweiterung
- 14: Befestigungsschraube
- 15: Haltemittel

## Patentansprüche

1. Walze zum Umlenken und/oder Transport einer laufenden Warenbahn (4), wobei die Walze (1) mindestens einen rohrförmigen Walzenkörper (2) aufweist, der über mindestens ein Wälzlager (6) drehbar an einer Achse (5) abgestützt ist, **dadurch gekennzeichnet, dass** der rohrförmige Walzenkörper (2) zumindest im Bereich des mindestens einen Wälzlagers (6) radial nach innen gerichtete Stege (7) aufweist, die über den Walzenumfang verteilt sind, wobei das mindestens eine Wälzlager (6) an den Stegen (7) abgestützt ist.

2. Walze nach Anspruch 1, **dadurch gekennzeichnet, dass** in mindestens einer Nut (8) zwischen den Stegen (7) mindestens eine axial ausgerichtete Erweiterung (13) zur Aufnahme von Befestigungsschrauben (14) und/oder-Wuchtgewichten vorgesehen ist.

3. Walze nach Anspruch 1 oder 2, **dadurch gekennzeichnet, dass** mindestens einer der Stege (7) an mindestens einem Ende (10) mindestens eine Verjüngung (11) aufweist.

4. Walze nach mindestens einem der Ansprüche 1 bis 3, **dadurch gekennzeichnet, dass** mindestens einer der Stege (7) an seinem innenseitigen Ende (9) mindestens eine radial nach innen gerichtete Nocke (12) aufweist, die beim Einsetzen des Wälzlagers (6) plastisch verformbar ist.

5. Walze nach mindestens einem der Ansprüche 1 bis 4, **dadurch gekennzeichnet, dass** der Walzenkörper (2) als Strangpressprofil gefertigt ist.

## Claims

1. Roller for deflecting and/or conveying a running material web (4), wherein the roller (1) has at least one tubular roller body (2) which is rotatably supported via at least one roller bearing (6) on an axle (5), **characterized in that** the tubular roller body (2) at least in the region of the at least one roller bearing (6) has webs (7) which are directed radially to the inside and which are distributed over the roller circumference, wherein the at least one roller bearing (6) is supported on the webs (7).

2. Roller according to Claim 1, **characterized in that** in at least one groove (8) between the webs (7) at least one axially oriented extension (13) for receiving fastening screws (14) and/or balancing weights is provided.

3. Roller according to Claim 1 or 2, **characterized in that** at least one of the webs (7) on at least one end (10) has at least one tapered section (11).

4. Roller according to at least one of Claims 1 to 3, **characterized in that** at least one of the webs (7) on its inner-side end (8) has at least one cam (12) which is directed radially to the inside and which is plastically deformable when inserting the roller bearing (6).

5. Roller according to at least one of Claims 1 to 4, **characterized in that** the roller body (2) is produced as an extruded profile.

## Revendications

1. Rouleau pour dévier et/ou transporter une bande de marchandises en mouvement (4), le rouleau (1) présentant au moins un corps de rouleau de forme tubulaire (2), qui est supporté de manière rotative sur un axe (5) par le biais d'au moins un palier à roulement (6), **caractérisé en ce que** le corps de rouleau de forme tubulaire (2) présente au moins dans la région de l'au moins un palier à roulement (6) des nervures orientées radialement vers l'intérieur (7), lesquelles sont réparties sur la périphérie du rouleau, l'au moins un palier à roulement (6) étant supporté sur les nervures (7) .

2. Rouleau selon la revendication 1, **caractérisé en ce que** dans au moins une rainure (8) entre les nervures (7) est prévu au moins un élargissement orienté axialement (13) pour recevoir des vis de fixation (14) et/ou des poids d'équilibrage.

3. Rouleau selon la revendication 1 ou 2, **caractérisé en ce qu'**au moins l'une des nervures (7) présente à au moins une extrémité (10) au moins un rétrécissement (11).

4. Rouleau selon au moins l'une quelconque des revendications 1 à 3, **caractérisé en ce qu'**au moins l'une des nervures (7) présente à son extrémité interne (9) au moins une came orientée radialement vers l'intérieur (12) qui peut être déformée plastiquement lors de l'insertion du palier à roulement (6).

5. Rouleau selon au moins l'une quelconque des revendications 1 à 4, **caractérisé en ce que** le corps de rouleau (2) est fabriqué sous forme de profilé filé.
